# EUROPÄISCHE PATENTSCHRIFT

(11) **EP 0 866 279 B1**
(45) Veröffentlichungstag und Bekanntmachung des Hinweises auf die Patenterteilung: **11.08.2004**
(21) Anmeldenummer: 98103868.0
(22) Anmeldetag: 05.03.1998
(51) Int. Cl.: F24D 3/02, F24D 19/10

(54) **Pumpe im Warmwasserkreislauf einer Zentralheizung**
Pump in a central heating hot water circuit
Pompe dans un cicuit d'eau chaude d'une installation de chauffage central

(30) Priorität: 18.03.1997 DE 19711178
(43) Veröffentlichungstag der Anmeldung: 23.09.1998
(73) Patentinhaber: WILO AG, 44263 Dortmund (DE)
(72) Erfinder: Strelow, Günter, 44801 Bochum (DE); Schmitz, Heribert, 35619 Braunfels (DE); Schmalfuss, Horst-Georg, Dr.Ing., 58540 Meinerzhagen (Valbert) (DE); Bach, Heinz, Prof.Dr.Ing., 70771 Leinfelden-Echterdingen (DE)
(74) Vertreter: COHAUSZ DAWIDOWICZ HANNIG & PARTNER

(56) Entgegenhaltungen:
- EP-A- 0 111 838
- EP-A- 0 352 401
- DE-A- 4 004 392
- DE-A- 19 526 462

## Beschreibung

Die Erfindung betrifft einen Warmwasserkreislauf einer Zentralheizung, insbesondere eines Ein- oder Mehrfamilienhauses oder eines Büro- oder Gewerbegebäudes, wobei die Wärme durch Heizkörper an die Raumluft abgegeben wird, und in Vor- oder Rücklauf jedes Heizkörpers ein separate, entsprechend dem Wärmebedarf drehzahlgeregelte Pumpe vorgesehen ist.

Es ist bekannt, den Warmwasserkreislauf einer Zentralheizung durch eine Motorkreiselpumpe umzuwälzen, die nahe der Wärmequelle (Heizungskessel), insbesondere im Heizkeller angeordnet ist. Diese Pumpe muß die Druckverluste aller Rohrleitungen des Warmwasserkreislaufes überwinden und wird in der Regel groß ausgelegt, so daß ein hoher Energieverbrauch besteht. Insbesondere die an den Heizkörpern angeordneten Thermostatventile vernichten die von der zentralen Pumpe erzeugte Energie, da die Pumpe gegen die Ventile anarbeiten muß.

Weiterhin ist aus der Druckschrift EP-A-0 111 838 bekannt, dem Warmwasserkreislauf einer Zentralheizung in Zonen zu unterteilen, wobei anstelle einer zentralen Pumpe separate Umwältzpumpen für jede zone treten.

Aufgabe der Erfindung ist es, eine oder mehrere Pumpen im Warmwasserkreislauf einer Zentralheizung so anzuordnen, daß für das Umwälzen des Warmwassers möglichst wenig Energie erforderlich ist und die erforderliche Energie dem Bedarf an Wärme angepaßt ist.

Diese Aufgabe wird erfindungsgemäß dadurch gelöst, daß für jeden Heizkörper eine separate drehzahlgeregelte Pumpe vorgesehen ist, die im Vor- oder Rücklauf des Heizkörpers liegt.

Durch eine solche Anordnung von Pumpen direkt am Verbraucher wird erreicht, daß jeder Verbraucher einzeln direkt bedient wird, so daß nur bei dem jeweiligen Bedarf des jeweiligen Verbrauchers die dazugehörige Pumpe entsprechend dem dort auftretenden Bedarf arbeitet. Folgende Vorteile sind hierdurch gegeben:
- Nur der für den jeweiligen Verbraucher, insbesondere Heizkörper erforderliche Volumenstrom wird gefördert.
- Der erforderliche Volumenstrom wird in Abhängigkeit des Bedarfs über Drehzahlregelung zur Verfügung gestellt.
- Die Raumtemperatur ist regelbar.
- Eine Reaktion auf schnelle Veränderung des Sollwertes (Fensterlüftung berücksichtigen) wird ermöglicht.
- Programmierbare Unterbrechungszeiten (Absenkung/Abschaltung).
- Grundsätzlicher Ersatz des thermostatischen Heizkörperventils.
- Erfassung des Wärmeverbrauchs im Sinne der Heizkostenverordnung ersetzt physikalische und elektronische Geräte an den Heizkörpern.
- Anzeige des aktuellen und summarischen Wärmeverbrauchs.
- Anzeige der Wassertemperaturen zum Heizkörper.
- Liegt kein Bedarf vor, schaltet die Pumpe automatisch ab und verhindert die Schwerkraftzirkulation.
- Selbsterkennende Funktionen (z. B. ein Kennfeld eingrenzen oder Störung anzeigen).
- Busfähig, bzw. mit Datensender über Funk oder Datenübertragung über Netzmodulation.
- Netzversorgung z.B. 230 bzw. 24 V Wechsel- oder Gleichspannung.
- Ggf. auch Möglichkeit des Einbaus in den Heizkörper.

Der Pumpenenergieverbrauch für das Heizsystem geht erheblich gegenüber einer zentralen Pumpe zurück. Es wird der unterbrochene Zeitbetrieb berücksichtigt. Die heutigen Möglichkeiten mit "intelligenten" Pumpen gehen weiter über das einfache Fördern des Mediums hinaus, es entstehen Synergieeffekte im Zeitsystem. Die Hydraulik des Heizsystems wird grundsätzlich einfacher. Die Abhängigkeit des Heizkessels von dem geförderten Volumen geht zurück. Die hydraulische Kompetenz der Pumpe wird gestärkt.

Vorteilhafte Ausgestaltungen sind in Unteransprüchen aufgeführt.

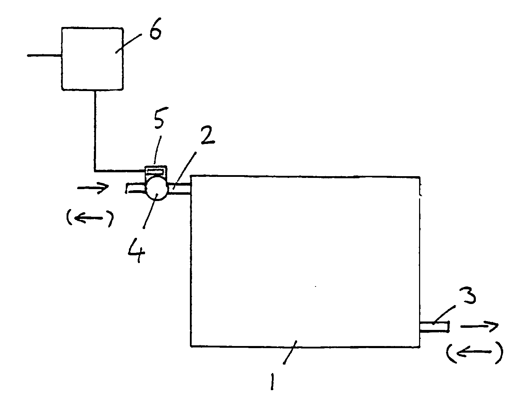

Ein Ausführungsbeispiel der Erfindung ist in der Zeichnung dargestellt und wird im folgenden mit weiteren Alternativen beschrieben:

Ein Heizkörper 1 im Raum eines Wohn-, Büro- oder Gewerbegebäudes, besitzt einen Einlauf 2 und einen Auslauf 3 , mit denen der Heizkörper im Warmwasserkreislauf einer Zentralheizung angeschlossen ist. Im oder am Einlaufstutzen des Heizkörpers 1 ist eine Motorkreiselpumpe 4 befestigt, die vorzugsweise ein normalerweise dort angeordnetes Thermostatventil ersetzt. Die Drehzahlpumpe wird durch eine elektronische Regelungsvorrichtung gesteuert, die mit Meßfühlern vorzugsweise die Raumtemperatur und die des Heizkörpers, insbesondere im Ein- und/oder Auslauf, mißt. Ferner geht in die Regelung die Uhrzeit, möglicherweise auch weitere Daten ein.

An der Pumpe befindet sich ein Anzeigedisplay 5, das den Zustand der Pumpe, den Wärmeverbrauch, die Vor- und/oder Rücklauftemperatur und/oder Fehlermeldungen wiedergibt. Auch kann die Regelungsvorrichtung mit Regelungsvorrichtungen anderer Heizkörper und/oder mit einem zentralen Rechner 6 verbunden sein.

Von Vorteil ist auch, wenn die elektronische Regelungsvorrichtung durch eine drahtlose Fernbedienung steuerbar ist.

Alle Regelungsvorrichtungen aller Heizkörper sind an einer Datenleitung angeschlossen und besitzen jeweils eine ansteuerbare Adresse. Vorzugsweise wird diese Datenleitung vom elektrischen Netz der Stromversorgung des Gebäudes gebildet.

Alternativ kann die Pumpe im Auslaufstutzen, im oder am Thermostatventil und/oder im Heizkörper angeordnet sein.

Da die Pumpe nur einen Verbraucher, insbesondere einen Heizkörper versorgen muß, kann sie sehr klein und geräuscharm sein. Vorzugsweise besitzt sie einen Volumenstrom von weniger als 100 l/h. In dem Fall, in dem die Pumpe im Vor- oder Rücklauf des Heizkörpers liegt, kann die Pumpe auch an einer entfernteren Stelle vom Heizkörper in derjenigen Leitung liegen, die den einen Heizkörper mit Warmwasser versorgt.

## Patentansprüche

1. Warmwasserkreislauf einer Zentralheizung mit Heizkörpern, die Wärme an die Raumluft abgeben, **dadurch gekennzeichnet, dass** unmittelbar im oder an jedem Heizkörper im Vor- oder Rücklauf eine separate entsprechend dem Wärmebedarf drehzahlgeregelte Pumpe, insbesondere eine Motorkreiselpumpe, vorgesehen ist.

2. Warmwasserkreislauf nach Anspruch 1,**dadurch gekennzeichnet, dass** die Pumpe am oder im Einlauf- oder Auslaufstutzen des Heizkörpers oder in der Verbindungsleitung zum Heizkörper angeordnet ist.

3. Warmwasserkreislauf nach einem der Ansprüch , 1 bis 2 **dadurch gekennzeichnet, dass** die Pumpe mindestens ein Anzeigedisplay aufweist, das den Zustand der Pumpe, den Wärmeverbrauch, die Vorund/oder Rücklauftemperatur und/oder Fehlermeldungen wiedergibt.

4. Warmwasserkreislauf nach einem der vorherigen Ansprüche, **dadurch gekennzeichnet, dass** die elektronische Regelungsvorrichtungder Pumpe mit elektronischen Regelungsvorrichtungen weiterer Heizkörper und/oder mit einem zentralen Rechner/Computer verbunden ist.

5. Warmwasserkreislauf nach einem der Ansprüche 4, **dadurch gekennzeichnet, dass** alle Regelungsvorrichtungen an einer Datenleitung angeschlossen sind und jeweils eine ansteuerbare Adresse besitzen.

6. Warmwasserkreislauf nach Anspruch 5, **dadurch gekennzeichnet, dass** die Datenleitung vom elektronischen Netz der Stromversorgung gebildet ist.

7. Warmwasserkreislauf nach einem der vorherigen Ansprüche, **dadurch gekennzeichnet, dass** die Pumpe durch eine drahtlose elektronische Fernbedienung steuerbar ist.

8. Warmwasserkreislauf nach einem der vorherigen Ansprüche, **dadurch gekennzeichnet, dass** die Pumpe einen Volumenstrom von weniger als 150 l/h, insbesondere von weniger als 100 l/h erzeugt.

## Claims

1. Central heating hot water circuit having heating elements which release heat into the ambient air, **characterised by** the provision of a separate pump whose speed is controlled in accordance with the demand for heat, more particularly a motor-driven centrifugal pump, directly in or on each heating element in the advance or return section of the circuit.

2. Hot water circuit according to claim 1, **characterised in that** the pump is arranged on or in the heating element's incoming connecting sleeve or outgoing connecting sleeve or in the connecting line to the heating element.

3. Hot water circuit according to either of claims 1 and 2, **characterised in that** the pump incorporates at least one display which indicates the pump's status, the heat consumption, the temperature in the advance and/or return section of the circuit, and/or error messages.

4. Hot water circuit according to any one of the preceding claims, **characterised in that** the pump's electronic control device is connected to electronic control devices of additional heating elements and/or to a central computer.

5. Hot water circuit according to claim 4, **characterised in that** all the control devices are linked to a data transmission line and have a selectable address in each case.

6. Hot water circuit according to claim 5, **characterised in that** the data transmission line is constituted by the power supply's electronic system.

7. Hot water circuit according to any of the preceding claims, **characterised in that** the pump can be operated by wireless electronic remote control.

8. Hot water circuit according to any of the preceding claims, **characterised in that** the pump generates a volumetric flow of less than 150 l/h, in particular less than 100 l/h.

## Revendications

1. Circuit d'eau chaude d'un chauffage central avec des radiateurs qui conduisent de la chaleur à l'air ambiant,
**caractérisé par le fait qu'**une pompe séparée réglée en vitesse de rotation en correspondance du besoin de chaleur, en particulier une motopompe centrifuge, est prévue directement dans ou sur chaque radiateur dans le conduit d'alimentation ou le retour.

2. Circuit d'eau chaude selon la revendication 1,
**caractérisé par le fait que** la pompe est disposée dans la tubulure d'entrée ou de sortie du radiateur ou dans la conduite de liaison au radiateur.

3. Circuit d'eau chaude selon l'une des revendications 1 à 2,
**caractérisé par le fait que** la pompe présente au moins un afficheur de visualisation qui reproduit l'état de la pompe, la consommation de chaleur, la température d'aller et/ou de retour et/ou des messages d'erreur.

4. Circuit d'eau chaude selon l'une des revendications précédentes,
**caractérisé par le fait que** le dispositif de réglage électronique dé la pompe est relié à des dispositifs de réglage électroniques d'autres radiateurs et/ou avec un calculateur/ordinateur central.

5. Circuit d'eau chaude selon la revendication 4,
**caractérisé par le fait que** tous les dispositifs de réglage sont raccordés à une ligne de données et possèdent respectivement une adresse pouvant être sélectionnée.

6. Circuit d'eau chaude selon la revendication 5,
**caractérisé par le fait que** la ligne de données est formée par le réseau électronique de l'alimentation en courant.

7. Circuit d'eau chaude selon l'une des revendications précédentes,
**caractérisé par le fait que** la pompe peut être commandée par une télécommande électronique sans fil.

8. Circuit d'eau chaude selon l'une des revendications précédentes,
**caractérisé par le fait que** la pompe engendre un débit volumique inférieur à 150 l/h, en particulier inférieur à 100 l/h.
